(19) Europäisches Patentamt
European Patent Office
Office européen des brevets

(11) EP 0 529 102 B1

(12) EUROPEAN PATENT SPECIFICATION

(45) Date of publication and mention of the grant of the patent:
**28.10.1998 Bulletin 1998/44**

(21) Application number: **92906723.9**

(22) Date of filing: **13.03.1992**

(51) Int Cl.[6]: **C08F 8/00**, C08F 8/18, C08F 8/30, C08F 10/06, C08F 4/685

(86) International application number:
**PCT/JP92/00308**

(87) International publication number:
**WO 92/16566 (01.10.1992 Gazette 1992/25)**

# (54) TERMINALLY MODIFIED POLYOLEFIN

ENDSTÄNDIG MODIFIZIERTES POLYOLEFIN

POLYOLEFINE MODIFIEE EN FIN DE CHAINE

(84) Designated Contracting States:
**DE FR GB**

(30) Priority: **15.03.1991 JP 51389/91**
**18.03.1991 JP 52639/91**
**18.03.1991 JP 52640/91**
**18.03.1991 JP 52641/91**
**08.11.1991 JP 293213/91**

(43) Date of publication of application:
**03.03.1993 Bulletin 1993/09**

(73) Proprietor: **Tonen Corporation**
**Tokyo 100 (JP)**

(72) Inventors:
- **KOYAMA, Naomi,**
**Corporate Res. & Dev. Laborloratory**
**Ooi-machi, Iruma-gun, Saitama 354 (JP)**
- **USUI, Miyuki, Corporate Res. & Dev. Laboratory**
**Ooi-machi, Iruma-gun, Saitama354 (JP)**
- **FURUHASHI, Hiroyuki,**
**Corporate Res. & Dev. Labor.**
**Ooi-machi, Iruma-gun, Saitama 354 (JP)**
- **UEKI, Satoshi, Corporate Res. & Dev. Laboratory**
**Ooi-machi, Iruma-gun, Saitama 354 (JP)**

(74) Representative:
**Baverstock, Michael George Douglas et al**
**BOULT WADE TENNANT,**
**27 Furnival Street**
**London EC4A 1PQ (GB)**

(56) References cited:

| | |
|---|---|
| EP-A- 188 915 | EP-A- 0 234 114 |
| EP-A- 0 329 891 | EP-A- 0 370 753 |
| JP-A- 2 140 202 | JP-A- 2 140 202 |
| JP-A- 2 140 212 | JP-A- 2 140 212 |

- **CHEMICAL ABSTRACTS, vol. 75, no. 26, 27 December 1971, Columbus, Ohio, US; abstract no. 152609s, AIJIMA, TOSHIO 'MODIFIED POLYOLEFIN COMPOSITES' page 37 ;column 1 ;**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 529 102 B1

Printed by Jouve, 75001 PARIS (FR)

## Description

This invention relates to polyolefins whose terminals are modified with (meth)acrylic acid derivative units.

In the polymerization of α-olefins such as propylene by the Ziegler Natta catalysts of the prior art, a chain-transfer reaction or chain termination reaction takes place and accordingly it is difficult to modify only the terminals of the polymer.

The present invention aims to provide a polypropylene or ethylene-propylene random copolymer in which only the terminals are modified with methacrylic acid (acrylic acid) derivative units to give a monodispersed system.

EP-A-0 234 114 describes a Ziegler-Natta catalyzed polymer chain end capped with at least one functional group-containing unit which is otherwise essentially absent from the polymer chain. This unit may be, for example, (meth) acrylate groups terminated by a $C_{1-30}$ hydrocarbon group.

The inventors have found that by reacting a living polypropylene or ethylene-propylene random copolymer, obtained using a specified catalyst with no accompanying chain-transfer reaction nor chain termination reaction, with a methacrylic acid (acrylic acid) derivative.

Accordingly, the present invention provides a terminal-modified polyolefin in which the terminal of polypropylene or an ethylene-propylene random copolymer are modified with a substituent represented by the following General Formula I:

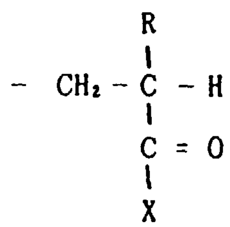

I

wherein R is a hydrogen atom or methyl group, X is a halogen atom, in particular a Cl atom, or OZ group wherein Z is $C_mH_{2m} \bullet OSiR^1R^2R^3$, $C_mH_{2m} \bullet OSi(R^4R^5) - OSiR^6R^7R^8$ or $C_mH_{2m} \bullet OH$ wherein $R^1$ to $R^3$, $R^4$ to $R^5$ and $R^6$ to $R^8$ are same or different alkyl groups each containing 1 to 8 carbon atoms or aryl groups and m is an integer of 1 to 6, a group represented by the following general formula:

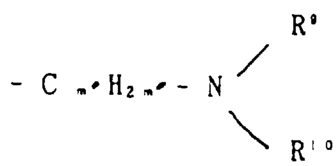

wherein $R^9$ and $R^{10}$ are same or different alkyl groups containing 1 to 4 carbon atoms and m' is an integer of 1 to 4, and a group represented by the following formula:

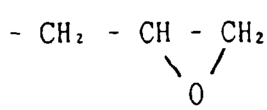

The present invention further provides the use of a terminal-modified polyolefin as defined below or as prepared by the method defined below as a compatibilizer, viscosity index-improver, or for imparting dyeability or adhesiveness to polymers.

The terminal-modified polyolefin of the present invention is ordinarily obtained in the form of a composition such that the terminal is represented by the following General Formula II:

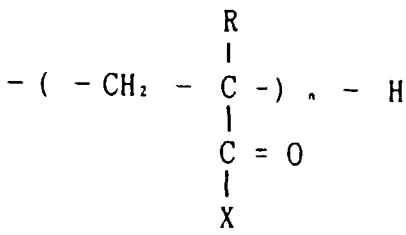

II

wherein R and X have the same meanings as defined above and n is from 0.1 to 100.

The terminal-modified polyolefin of the present invention can be prepared by polymerizing propylene or random-copolymerizing ethylene and propylene in the presence of a catalyst consisting of an organoaluminum compound and a vanadium compound represented by the following General Formula III:

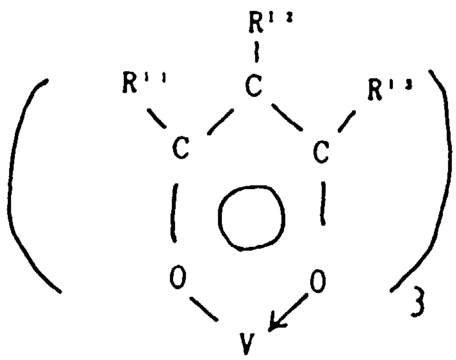

III

wherein $R^{11}$ to $R^{13}$ are hydrogen atoms or hydrocarbon groups of 1 to 8 carbon atoms and at least one of $R^{11}$ to $R^{13}$ must be a hydrogen atom, but all of $R^{11}$ to $R^{13}$ must not be hydrogen atoms, thus obtaining repectively living polypropylene or living ethylene-propylene copolymer, and then reacting the polypropylene or ethylene-propylene copolymer with a methacrylic acid (acrylic acid) derivative represented by the following General Formula IV:

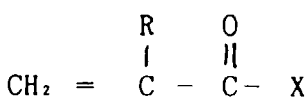

IV

wherein R and X have the same meanings as described above, but excluding a case when X is OZ, wherein Z is $C_mH_{2m} \bullet OH$. When Z is $C_mH_{2m} \bullet OH$, the above described polymers can be obtained by reacting a reaction product having the above described Si-containing group with a proton donor.

Catalyst

(a) Vanadium Compound

Examples of the compound included in formula III are:

Cases where $R^{12}$ is a hydrogen atom and $R^{11}$ and $R^{13}$ are hydrocarbon groups:

$R^{11}/R^{13}$: $CH_3/CH_3$, $CH_3/C_2H_5$, $C_2H_5/C_2H_5$, $CH_3/C_6H_5$, $C_2H_5/C_6H_5$, $C_6H_5/C_6H_5$, $CH_3/C_6H_5CH_2$, $C_6H_5CH_2/C_6H_5CH_2$, $C_2H_5/C_6H_5CH_2$, $C_6H_5/C_6H_5CH_2$

Cases where $R^{12}$ is a hydrocarbon group and one of $R^{11}$ and $R^{13}$ is a hydrogen atom and the other is a hydrocarbon group:

$R^{12}/R^{11}$ or $R^{13}$: $CH_3/CH_3$, $C_2H_5/CH_3$, $CH_3/C_2H_5$, $C_2H_5/C_2H_5$, $C_6H_5/CH_3$, $CH_3/C_6H_5$, $C_6H_5/C_2H_5$. $C_2H_5/C_6H_5$, $C_6H_5/C_6H_5$, $C_6H_5CH_2/CH_3$, $CH_3/C_6H_5CH_2$, $C_6H_5CH_2/C_6H_5CH_2$, $C_6H_5CH_2/C_2H_5$. $C_2H_5/$

$C_6H_5CH_2$, $C_6H_5CH_2/C_6H_5$. $C_6H_5/C_6H_5CH_2$

Cases where $R^{12}$ is a hydrogen atom and one of $R^{11}$ and $R^{13}$ is a hydrogen atom and the other is a hydrocarbon group:

$R^{11}$ or $R^{13}$: $CH_3$, $C_2H_5$, $C_6H_5$, $C_6H_5CH_2$

Above all, the following compounds are preferred:

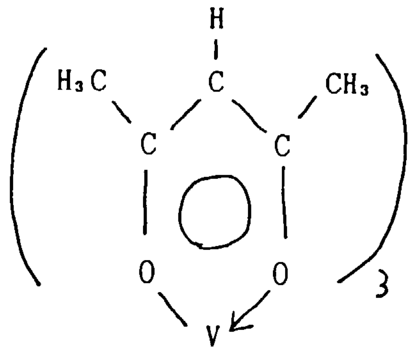

V(acetylacetonato)₃

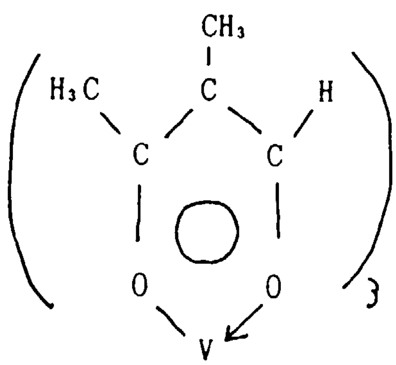

V(2-methyl-1,3-butanedionato)₃

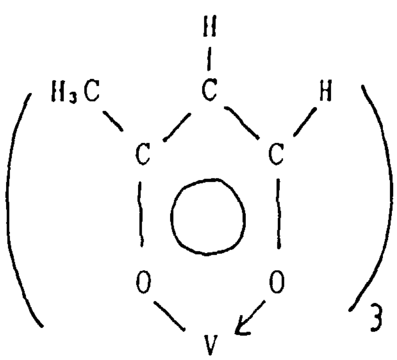

V(1,3-butanedionato)₃

(b) Organoaluminum Compound

As the organoaluminum compound, there may be used those represented by the general formula $R^{14}{}_{n'}AlX'_{3-n'}$ wherein $R^{14}$ is an alkyl or aryl group, X is a halogen atom or hydrogen atom and n' is such that $1 \leqq n' < 3$, for example, alkylaluminum compounds containing 1 to 18 carbon atoms, preferably 2 to 6 carbon atoms, such as dialkylaluminummonohalide, monoalkylaluminum dihalide and alkylaluminum sesquihalide, mixtures or complex compounds thereof. Specifically, there are dialkylaluminum monohalides such as dimethylaluminum chloride, diethylaluminum chloride, diethylaluminum bromide, diethylaluminum iodide and diisobutylaluminum chloride, monoalkyl aluminum dihalides such as methylaluminum dichloride, ethylaluminum dichloride, methylaluminum dibromide, ethylaluminum dibromide, ethylaluminum diiodide and isobutylaluminum dichloride, and alkylaluminum sesquihalides such as ethylaluminum sesquichloride.

The proportion of the organoaluminum compound used is generally 1 to 1,000 moles per 1 mole of the vanadium compound.

Living polymerization of Propylene

The living polymerization of propylene includes homopolymerization of propylene and copolymerization of propylene with a small amount of ethylene or α-olefins such as 1-butene, 1-hexene or 4-methyl-1-pentene.

The polymerization is preferably carried out in a solvent inert to the polymerization and which is liquid during the polymerization, for example a saturated aliphatic hydrocarbon such as propane, butane, pentane, hexane, or heptane, saturated alicyclic hydrocarbon such as cyclopropane or cyclohexane, or aromatic hydrocarbon such as benzene, toluene or xylene.

The amount of polymerization catalyst used in the polymerization of propylene is generally, per 1 mole of propylene or propylene with a small amount of a comonomer, $1 \times 10^{-4}$ to 0.1 mole, preferably $5 \times 10^{-4}$ to $5 \times 10^{-2}$ mole, of the vanadium compound and $1 \times 10^{-4}$ to 0.5 mole, preferably $1 \times 10^{-3}$ to 0.1 mole, of the organoaluminum compound. The organoaluminum compound is preferably used in a proportion of 4 to 100 moles per 1 mole of the vanadium compound.

The living polymerization is generally carried out at -100 °C to +100 °C for 0.5 to 50 hours.

The molecular weight and yield of the resulting living polypropylene can be controlled by changing the reaction temperature and reaction time. When the polymerization temperature is adjusted to a low temperature, in particular at most -30 °C, there can be obtained a polymer with a substantially monodispersed molecular weight distribution. At a temperature of at most -50°C, there can be obtained a living polymer with an Mw (weight average molecular weight)/Mn (number average molecular weight) ratio of 1.05 to 1.40.

In the polymerization, a reaction accelerator can be used. As the reaction accelerator, there may, for example, be used anisole, water, oxygen, alcohols such as methanol, ethanol or isopropanol or esters such as ethyl benzoate or ethyl acetate. The amount of the accelerator used is ordinarily 0.1 to 2 moles per 1 mole of vanadium compound.

In this way, a living polypropylene having a number average molecular weight of 500 to 500,000 and a substantially monodispersed system can be produced.

Living Random Copolymerization of Ethylene-Propylene

The polymerization is preferably carried out in a solvent inert to the polymerization and which is liquid during the polymerization, for example a saturated aliphatic hydrocarbon such as propane, butane, pentane, hexane or heptane, saturated alicyclic hydrocarbon such as cyclopropane or cyclohexane, or aromatic hydrocarbon such as benzene, toluene or xylene.

Contacting of ethylene and propylene with a polymerization catalyst can be carried out by a suitable method, preferably by a method comprising adding, in order, a solution of the organoaluminum compound and a solution of the vanadium compound to a solvent solution of ethylene and propylene and contacting them, or a method comprising adding ethylene and propylene to a solvent solution of the organoaluminum compound and vanadium compound and contacting them.

The amount of a polymerization catalyst used in the copolymerization is generally, per 1 mole of ethylene and propylene, $1 \times 10^{-4}$ to 0.1 mole, preferably $5 \times 10^{-4}$ to $5 \times 10^{-2}$ mole, of the vanadium compound and $1 \times 10^{-4}$ to 0.5 mole, prefrably $1 \times 10^{-3}$ to 0.1 mole, of the organoaluminum compound. The organo-aluminum compound is preferably used in a proportion of 4 to 100 moles per 1 mole of the vanadium compound.

The molecular weight and yield of the resulting living copolymer can be controlled by changing the reaction temperature and reaction time. When the polymerization temperature is adjusted to a low temperature in the present invention, in particular to at most -30 °C, there can be obtained a polymer having a substantially monodispersed molecular weight distribution. At a temperature of at most -50°C there can be obtained a living ethylene-propylene random copolymer with an Mw (weight average molecular weight)/Mn (number average molecular weight) ratio of 1.05 to 1.40.

In the polymerization, a reaction accelerator can be used. As the reaction accelerator, there may, for example, be used anisole, water, oxygen, alcohols such as methanol, ethanol or isopropanol or esters such as ethyl benzoate or ethyl acetate. The amount of the accelerator used is ordinarily 0.1 to 2 moles per 1 mole of vanadium compound.

The ratio of ethylene and propylene in the living copolymer is ordinarily up to 90 mole % of ethylene. This can be controlled by changing the ratio of ethylene and propylene used in the living polymerization, but if the amount of ethylene used is increased, the molecular weight distribution of the copolymer is widened, which is not preferable. When it is desired to produce a living copolymer with a higher ethylene content and a narrower molecular weight distribution, i. e. near monodisperse, a very small amount of propylene is added to the polymerization system before the living copolymerization of ethylene and propylene and maintained for 0.1 to 1 hour, whereby a larger amount of ethylene can be introduced into the copolymer while maintaining narrow the molecular weight distribution of the living copolymer.

In this way, a living ethylene-polypropylene random copolymer having a number average molecular weight (in terms of propylene, to be repeated in the following) of 500 to 500,000 and a substantially monodispersed system can be produced.

<u>Reaction with Methacrylic Acid (Acrylic Acid) Derivative</u>

A methacrylic acid (acrylic acid) derivative (which will hereinafter be referred to as Compound I) to be reacted with the living polypropylene or ethylene-propylene random copolymer is represented by the following General Formula IV:

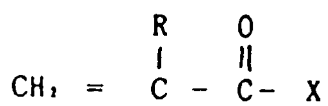

IV

wherein R and X have the same meaning as defined above. Specifically, the methacrylic acid (acrylic acid) derivative may be as follows:

<u>Represented by General Formula VI</u>

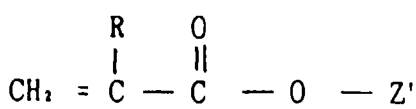

VI

in which R is a hydrogen atom or methyl group, Z' is $C_mH_{2m} \cdot OSiR^1R^2R^3$ or $C_mH_{2m} \cdot OSi(R^4R^5)OSiR^6R^7R^8$, m Is an integer of 1 to 6 and $R^1$ to $R^3$, $R^4$ to $R^5$ and $R^6$ to $R^8$ are same or different alkyl groups each containing 1 to 8 carbon atoms or aryl groups such as phenyl, tolyl and xylyl groups. Alkyl groups containing 1 to 4 carbon atoms, such as methyl, ethyl, (n, i-)propyl and (n, i, s, t-)butyl groups are particularly preferable. In addition, $R^1$ to $R^3$, $R^4$ to $R^5$ and $R^6$ to $R^8$ are preferably the same groups.

In this specification, " · " in "$\cdot OSiR^1R^2R^3$". "$\cdot OSi(R^4R^5)OSiR^6R^7R^8$" and " · OH" means bonding to any carbon atom in the alkylene group $C_mH_{2m}$.

<u>Represented by General Formula VII</u>

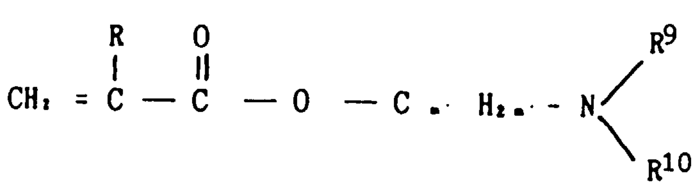

VII

in which R, $R^9$ and $R^{10}$ and m' have the same meanings as described above. Specifically, $R^9$ and $R^{10}$ are methyl, ethyl, n-propyl, i-propyl, n-butyl, i-butyl, s-butyl and t-butyl groups. $C_{m'}H_{2m'}$ is an alkylene group, preferably a linear alkylene group of the formula $(CH_2)_{m'}$.

Typical examples of Compound I are, in addition to the above described:

Glycidyl (Meth)acrylate

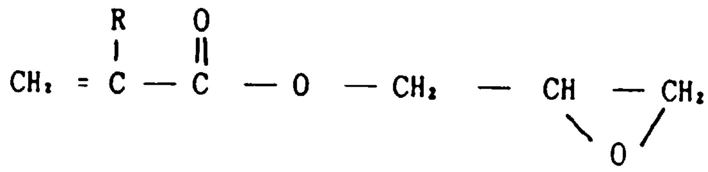

(Meth)acrylic Acid Chloride

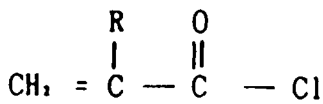

The reaction of a living polypropylene or ethylene-propylene random copolymer with Compound I is preferably carried out by feeding Compound I to a reaction system in which the living polypropylene or ethylene-propylene random copolymer Is present. The reaction is carried out at a temperature of -100 °C to +150 °C for 5 minutes to 50 hours. The modification efficiency of the terminal of a polyolefin with Compound I unit can be increased by raising the temperature or lengthening the reaction time.

Compound I is generally used in a proportion of 1 to 1,000 moles to 1 mole of a living polyolefin.

The reaction product of a living polypropylene or ethylene-propylene random copolymer with Compound I is then brought into contact with a proton donor to obtain a terminal-modified polyolefin according to the present invention. As the proton donor, there are used alcohols such as methanol, ethanol or phenol, and mineral acids such as hydrochloric acid or sulfuric acid. The alcohol and mineral acid can simultaneously be used. Generally, the proton donor is used in large excess. Contacting with the proton donor is generally carried out at -100 °C to +150 °C for 1 minute to 50 hours, preferably at -100 °C to +100 °C for 1 minute to 10 hours.

When using the foregoing (meth)acrylic acid derivative of General Formula VI, the terminal-modified polyolefin is obtained where Z in the substituent of General Formula I is $C_mH_{2m} \cdot OSiR^1R^2R^3$ or $C_mH_{2m} \cdot OSi(R^4R^5)0SiR^6R^7R^8$.

Furthermore, the terminal-modified polyolefin of the present invention where Z is $C_mH_{2m} \cdot OH$ can be prepared by reacting the thus obtained terminal-modified polyolefin with a proton donor.

As the proton donor, there are used alcohols such as methanol, ethanol or phenol, and mineral acids such as hydrochloric acid or sulfuric acid. The alcohol and mineral acid can simultaneously be used. Generally, the proton donor is used in a large excess. Contactting with the proton donor is generally carried out at -100 °C to +100 °C for 1 minute to 10 hours.

The polyolefin of the present invention, obtained in this way, has a number average molecular weight (Mn) of 500 to 500,000 and a very narrow molecular weight distribution (Mw/Mn = 1.05 to 1.40) corresponding to the foregoing living polypropylene or ethylene-propylene random copolymer itself, whose terminals are modified with 0.1 to 100 units, preferably 0.1 to 50 units, more preferably 0.2 to 20 units of the Compound I.

However, when X in General Formula I is represented by:

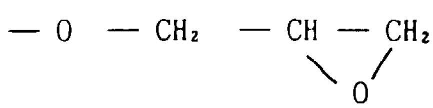

the terminals are modified with 0.1 to 500 units, preferably 0.2 to 100 units, more preferably 0.5 to 50 units of the Compound I and when X is Cl, the terminals are modified with 0.1 to 100 units, preferably 0.2 to 50 units, more preferably 0.3 to 25 units of the Compound I.

One of the features of the terminal-modified polypropylene according to the present invention is that the syndiotactic dyad fraction is at least 0.6.

## Examples

The present invention will be illustrated by the following Examples, in which characterization of the polymers was

carried out by the following methods:

Molecular Weight and Molecular Weight Distribution

GPC (gel permeation chromatography) Model 150 (commercial name, made by Waters Co.) was used. Solvent: o-dichlorobenzene; Measuring Temperature: 135 °C ; Solvent Flow Rate: 1.0 ml/min; Column: GMH 6HT (commercial name, made by Toso KK). For the measurement, a standard sample of a monodispersed polystyrene made by Toso KK was used and a calibration curve of polystyrene was sought, from which a calibration curve of polypropylene was prepared by the universal method.

Determination of Structure of Polymer

($^1$H-NMR Spectrum): Measurement was carried out using a NMR spectrometer of the Fourier transformation type, GSX-400 (commercial name, made by Nippon Denshi KK) at 400 MHz, 30 °C and a pulse interval of 15 seconds. A sample was dissolved in dichloroform and prepared.

($^{13}$C-NMR Spectrum): Measurement was carried out using a NMR spectrometer of the XL-200 type (commercial name, made by Variant Co.) equipped with a PFT (Pulse Fourier Transformation) means at 50 MHz, 120 °C, a pulse width of 8.2 μS $\pi/3$, a pulse interval of 4 seconds and an integrating number of 5,000. A sample was dissolved in a mixed solvent of trichlorobenzene and benzene (2 : 1) and prepared.

(Infrared Absorption Spectrum)

A polymer was cast on a plate of KBr and subjected to measurement using an infrared spectro photometer, Model IR-810 (commercial name, made by Nippon Bunko Kogyo KK).

<u>Example 1</u>

<u>Living Polymerization of Propylene</u>

100 ml of n-heptane was charged in a 300 ml flask, the atmosphere was sufficiently replaced by nitrogen gas, and then the flask was cooled to -60 °C and 200 millimoles of propylene was added at the same temperature and dissolved in the n-heptane. A solution of 15 millimoles of $Al(C_2H_5)_2Cl$ in n-heptane and a solution of 1.5 millimole of V(2-methyl-1,3-butanedionato)$_3$ in toluene were then added thereto and stirred to start polymerization. The polymerization of propylene was carried out at -60°C for 1 hour.

<u>Reaction with Trimethylsiloxyethyl Methacrylate</u>

100 millimoles of trimethylsiloxyethyl methacrylate (HEMA-Si) was added to the above described reaction system at -60 °C, the temperature of the system was raised to 25 °C for 1 hour and the reaction with HEMA-Si was carried out at the same temperature. After 5 hours, the reaction solution was added to 500 ml of ethanol to precipitate a polymer. The resulting polymer was washed with methanol five times and dried at room temperature to obtain 0.86 g of a polymer.

The resulting polymer exhibited a GPC curve with a single peak and had an Mn of 2.7 x $10^3$ and Mw/Mn of 1.15, near monodisperse.

When this polymer was subjected to IR analysis, there were found a peak due to absorption of carbonyl at 1740 $cm^{-1}$' and a broad peak due to absorption of a hydroxy group at near 3450 $cm^{-1}$, but no absorption of a trimethylsilyl group was found.

Moreover, as a result of $^1$H-NMR, peaks of the following chemical shift values were observed in addition to a peak ($\delta$ = 0.7~ 1.7 ppm) due to the protons of the polypropylene. The proton of the methyl in the trimethylsilyl group was not found.

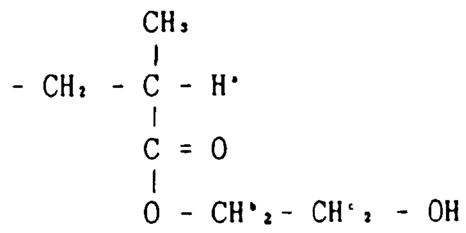

| Assignment | Chemical Shift Value (ppm: TMS Standard) |
|---|---|
| a | 2.55 |
| b | 4.2 |
| c | 3.8 |

It was found from the area ratio of the proton signal (δ = 0.7 ~ 1.7 ppm) of the polypropylene moiety and the proton signal (c) of the above described substituent was such that the resulting polymer had one above described substituent unit incorporated at the terminal of polypropylene.

It is assumed from the above described results that the reaction product obtained by the reaction of the living propylene with HEMA-Si before contacting with the ethanol is a polymer having one substituent unit described below, bonded to the terminal of the polypropylene chain:

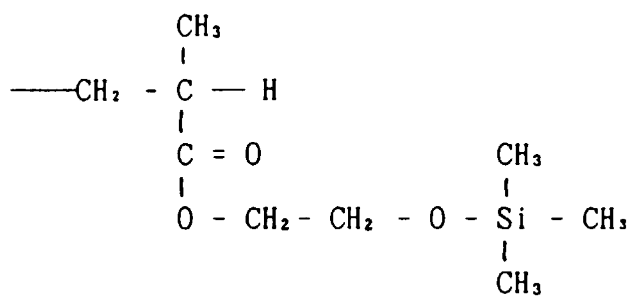

In order to determine the syndiotactic dyad fraction of the resulting polypropylene, in addition, living polymerization of propylene was carried out in the same manner as described above and the reaction solution was rapidly added to 500 ml of a solution of ethanol and hydrochloric acid cooled to -78°C to stop the polymerization. The separated polymer was washed with 500 ml of ethanol five times and dried at room temperature to obtain polypropylene.

Then, the resulting polypropylene was subjected to $^{13}$C-NMR analysis. The stereoregularity of the polypropylene, calculated from the multiplet intensity ratio of methyl carbons of the spectrum, is shown in the following:

| Triad Fraction | | | Dyad Fraction a) |
|---|---|---|---|
| [rr] | [rm] | [mm] | [r] |
| 0.627 | 0.317 | 0.056 | 0.786 |

a) calculated from triad fraction

<u>Examples 2 and 3</u>

Example 1 was repeated except that the polymerization conditions of propylene and reaction conditions of HEMA-Si were adjusted as shown in Table 1. to obtain a terminal-modified polypropylene. The results are shown in Table 1.

<u>Example 4</u>

400 ml of n-heptane was charged in a 1500 ml autoclave, the atmosphere was sufficiently replaced by nitrogen gas, and then the autoclave was cooled to -60°C, and 200g of propylene was added at the same temperature and liquefied and dissolved in the n-heptane. A solution of 50 millimoles of $Al(C_2H_5)_2Cl$ in n-heptane and a solution of 0.6

millimole of V(2-methyl-1,3-butanedionato)3 in toluene were then added thereto and stirred to start polymerization. The polymerization was continued for 15 hours. 500 millimoles of HEMA-Si was added thereto at the same temperature and the reaction with HEMA-Si was carried out at -60°C for 10 hours. Subsequently, the procedure of Example 1 was carried out to obtain a terminal-modified polypropylene having the properties shown in Table 1.

Example 5

Propylene was polymerized in an analogous manner to Example 4 and the reaction with HEMA-Si was carried out in an analogous manner to Example 1 except that the reaction conditions were adjusted to as Table 1, thus obtaining a terminal-modified polypropylene having the properties shown in Table 1.

Example 6

Example 1 was repeated except using 2-trimethylsiloxypropyl methacrylate (HPMA-Si) instead of HEMA-Si and adjusting the reaction conditions to those shown in Table 1, thus obtaining a polymer.

When this polymer was subjected to IR analysis, there were found a peak due to absorption of carbonyl at 1740 $cm^{-1}$ and a broad peak due to absorption of a hydroxy group at near 3450 $cm^{-1}$, but no peak due to absorption of a trimethylsilyl group. Moreover, as a result of $^1$H-NMR analysis, it was confirmed that the resulting polymer had one substituent unit described below at the terminal of the polypropylene.

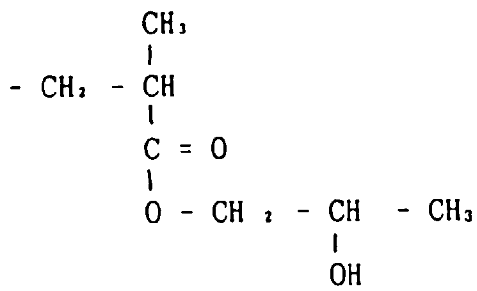

It is assumed from the above described results that the reaction product obtained by the reaction of the living propylene with HPMA-Si before contacting with the ethanol is a polymer having one substituent unit described below bonded to the terminal of the polypropylene chain:

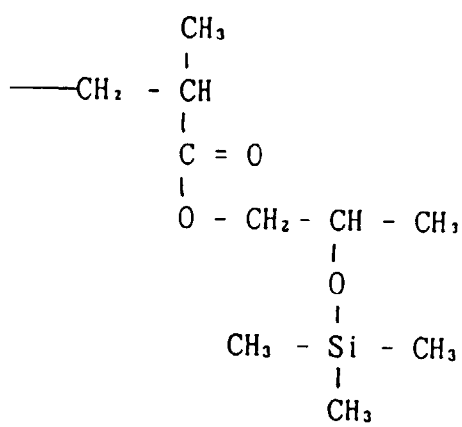

Table 1

| Example | Polymerization Conditions of Propylene | | Reaction Conditions of Compound I | | Polymer | | | |
|---|---|---|---|---|---|---|---|---|
| | Temp. (°C) | Time (Hr) | Temp. (°C ) | Time (Hr) | Yield (g) | Mn ($x10^3$) | Mw/Mn | n Value in General Formula |
| 1 | -60 | 1 | 25 | 5 | 0.86 | 2.7 | 1.15 | 1 |
| 2 | -60 | 1 | -40 | 10 | 0.87 | 2.8 | 1.16 | 3 |
| 3 | -60 | 2 | 0 | 5 | 1.83 | 5.9 | 1.14 | 2 |
| 4 | -60 | 10 | -40 | 15 | 26.1 | 79.5 | 1.29 | 7 |
| 5 | -78 | 3 | -60 | 1 | 0.59 | 6.4 | 1.17 | 1 |
| 6 | -60 | 1 | -60 | 1 | 0.91 | 2.9 | 1.16 | 1 |

Example 7

Synthesis of Living Ethylene-Propylene Random Copolymer

250 ml of n-heptane was charged in a 500 ml autoclave of 500 ml, the atmosphere was sufficiently replaced by nitrogen gas, and then the autoclave was cooled to -60°C, and a solution of 15 millimoles of $Al(C_2H_5)_2Cl$ in n-heptane and a solution of 1.5 millimole of V(2-methyl-1,3-butanedionato)3 in toluene were than added at the same temperature. After evacuating the system to 93 kPa (700 mmHg), a mixed gas of ethylene and propylene (40/60 mole ratio) was continuously fed thereto and copolymerization of ethylene-propylene was effected at -60°C for 1 hour, thus synthesizing a living ethylene-propylene random copolymer (hereinafter referred to as EPR).

On the other hand, in order to determine the molecular weight, molecular weight distribution and propylene content of the ethylene-propylene copolymer moiety, ethylene and propylene were copolymerized in the same manner as described above, thus obtaining 1.83 g of EPR with an Mn of 6.8 x $10^3$ and Mw/Mn ratio of 1.21. Further, this copolymer was subjected to a $^{13}$C-MNR measurement and a propylene content was calculated from areas of a peak (S) assigned to secondary carbon and a peak (T) assigned to tertiary carbon, based on the following formula. The propylene content of the copolymer was found to be 52.7 mole %.

$$\text{Propylene Content (mole \%)} = \{T/1/2(S + T)\} \times 100$$

When this copolymer was subjected to thermal analysis by a differential scanning calorimeter (DSC) no glass transition temperature (about -10°C) due to propylene homopolymer was observed.

Reaction with Trimethylsiloxyethyl Methacrylate

250 millimoles of trimethylsiloxyethyl methacrylate (HEMA-Si) was added to the above described reaction system at the same temperature, the temperature of the system was raised to 0°C for 1 hour and the reaction with HEMA-Si was carried out while stirring at the same temperature. After 5 hours, the reaction solution was added to 500 ml of methanol to precipitate a polymer. The resulting polymer was washed with methanol five times and dried under reduced pressure at room temperature to obtain 1.85 g of a polymer.

The resulting polymer exhibited a GPC curve with a single peak and had an Mn of 6.8 x $10^3$ and Mw/Mn of 1.22, near monodisperse.

When this polymer was subjected to IR analysis, there was found an absorption due to stretching vibration of carbonyl at 1740 $cm^{-1}$. At near 3450 $cm^{-1}$, a broad peak due to absorption of a hydroxy group was found, but no absorption of a trimethylsilyl group was found.

Moreover, as a result of $^1$H-NMR analysis, peaks of the following chemical shift values were observed in addition to a peak ($\delta$ = 0.7 ~ 1.7 ppm) due to the proton of the EPR moiety. A peak assigned to the methyl proton in the trimethylsilyl group was not found.

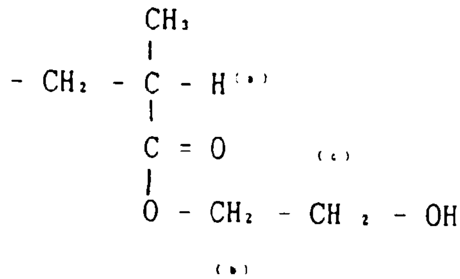

| Assignment | Chemical Shift Value (ppm: TMS Standard) |
|---|---|
| (a) | 2.55 |
| (b) | 4.2 |
| (c) | 3.8 |

It was found from the area ratio of the proton signal (δ = 0.7 ~ 1.7 ppm) of the EPR moiety and the above described proton signal (c), the propylene content and molecular weight of EPR that the resulting polymer had the above described two substituent units incorporated at the terminal of EPR, as described below.

It is assumed from the above described results that the reaction product obtained by the reaction of the living EPR with HEMA-Si before contacting with the methanol is a polymer having two substituent units described below, bonded to the terminals of the EPR chain:

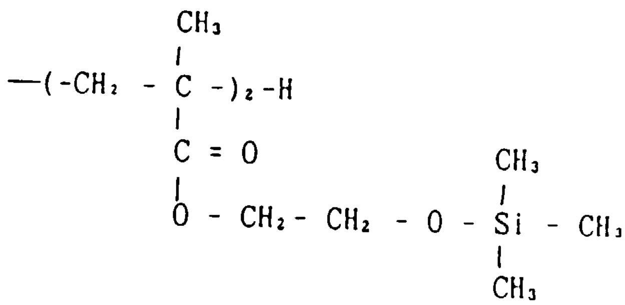

Example 8

Example 7 was repeated except that the copolymerization conditions of ethylene-propylene and reaction conditions of HEMA-Si were adjusted as shown in Table 2 to obtain a terminal-modified EPR.

On the other hand, ethylene and propylene were copolymerized in the same manner as described above, thus obtaining 3.72 g of EPR with an Mn of 13.0 x $10^3$, Mw/Mn ratio of 1.21 and propylene content of 56.2 mole %.

Example 9

800 ml of n-heptane was charged in a 1500 ml autoclave, the atmosphere was sufficiently replaced by nitrogen gas, and then the autoclave was cooled to -60°C, and 1.5g of propylene was added at the same temperature, which was liquefied and dissolved in the n-heptane. A solution of 40 millimoles of $Al(C_2H_5)_2Cl$ in n-heptane and a solution of 0.8 millimole of V(2-methyl-1,3-butanedionato)3 in toluene were then added thereto and stirred at -60°C for 10 minutes. After the system was evacuated to 90 kPa (680 mmHg), a mixed gas of ethylene and propylene (50/50 mole ratio) was continuously fed to the system and copolymerization of ethylene-propylene was carried out at -60°C for 10 hours, thus synthesizing a living EPR.

500 millimoles of HEMA-Si was then added thereto at the same temperature, the temperature of the reaction system was raised to -40°C for 1 hour and reaction with HEMA-Si was carried out for 15 hours. Subsequently, the procedure of Example 7 was repeated to obtain a terminal-modified EPR having the properties shown in Table 2.

Example 10

250 ml of toluene was charged in a 500 ml autoclave, the atmosphere was sufficiently replaced by nitrogen gas, and then the autoclave was cooled to -78°C, and a solution of 15 millimoles of $Al(C_2H_5)_2Cl$ in n-heptane and a solution of 1.5 millimoles of $V(acetylacetonato)_3$ in toluene were then added. After the system was evacuated to 93 kPa (700 mmHg), a mixed gas of ethylene and propylene (40/60 mole ratio) was continuously fed to the system and copolymerization of ethylene-propylene was carried out at -78°C for 3 hours, thus synthesizing a living EPR.

250 millimoles of HEMA-Si was then added thereto at the same temperature, the temperature of the reaction system was raised to -20°C for 1 hour and reaction with HEMA-Si was carried out for 1 hour. Subsequently, the procedure of Example 7 was repeated to obtain a terminal-modified EPR having the properties shown in Table 2.

Example 11

Example 7 was repeated except using 2-trimethylsiloxypropyl methacrylate (HPMA-Si) instead of HEMA-Si and adjusting the reaction condition as shown in Table 2, thus obtaining a polymer.

When this polymer was subjected to IR analysis, there was found an absorption due to stretching vibration of carbonyl at 1740 $cm^{-1}$. At near 3450 $cm^{-1}$, a broad peak due to absorption of a hydroxyl group was found, but no absorption of a trimethylsilyl group was found.

Moreover, as a result of $^1$H-NMR analysis, it was confirmed that the resulting polymer had one substituent unit described below at the terminal of the EPR.

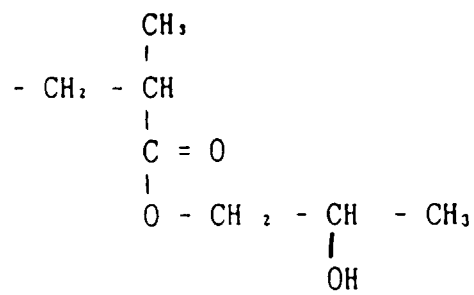

It is assumed from the above described results that the reaction product obtained by the reaction of the living EPR with HPMA-Si before contacting with the methanol was a polymer having one substituent unit described below bonded to the terminal of the EPR chain.

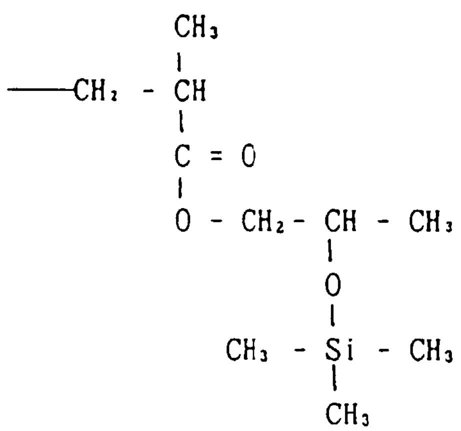

Table 2

| Examples | Polymerization Conditions of EPR | | Reaction Conditions of Compound I | | Terminal-modified EPR | | | |
|---|---|---|---|---|---|---|---|---|
| | Temp. (°C ) | Time (Hr) | Temp. (°C) | Time (Hr) | Yield (g) | Mn ($x10^3$ ) | Mw/Mn | n Value in General Formula |
| 7 | -60 | 1 | 0 | 5 | 1.85 | 6.8 | 1.22 | 2 |
| 8 | -60 | 2 | -40 | 5 | 3.72 | 13.0 | 1.22 | 3 |
| 9 | -60 | 10 | -40 | 15 | 25.1 | 102.5 | 1.27 | 6 |
| 10 | -78 | 3 | 20 | 1 | 1.57 | 8.8 | 1.25 | 1 |
| 11 | -60 | 1 | -60 | 3 | 1.80 | 7.0 | 1.24 | 1 |

Example 12

Living Polymerization of Propylene

100 ml of n-heptane was charged in a 300 ml flask, the atmosphere was sufficiently replaced by nitrogen gas, and then the flask was cooled at -60°C, to which 200 millimoles of propylene was added at the same temperature, which was dissolved in the n-heptane. A solution of 15 millimoles of $Al(C_2H_5)_2Cl$ in n-heptane and a solution of 1.5 millimole of $V(2\text{-methyl-1-3-butanedionato})_3$ in toluene were then added thereto and stirred to start polymerization. The polymerization of propylene was carried out at -60°C for 1 hour.

Reaction with N,N-dimethylaminoethyl methacrylate

100 millimoles of N,N-dimethylaminoethyl methacrylate (DMA) was added to the above described reaction system at the same temperature, the temperature of the system was raised to 0°C for 1 hour and the reaction with DMA was carried out while stirring. After 1 hour, the reaction solution was added to 500 ml of methanol to precipitate a polymer. The resulting polymer was washed with 500 ml of methanol five times and dried at room temperature to obtain 1.26 g of a polymer.

The resulting polymer exhibited a GPC curve with a single peak and had an Mn of 3.4 x $10^3$ and Mw/Mn of 1.18, near monodisperse.

When this polymer was subjected to IR analysis, there was found a peak due to absorption of carbonyl at 1740 $cm^{-1}$.

Moreover, as a result of $^1H$-NMR, peaks of the following chemical shift values were observed in addition to a peak ($\delta$ = 0.7 ~ 1.7 ppm) due to the polypropylene.

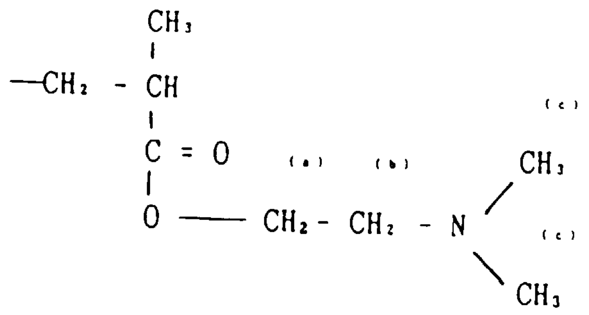

| Assignment | Chemical Shift Value (ppm: TMS Standard) |
|---|---|
| (a) | 4.2 |
| (b) | 2.5 |
| (c) | 2.3 |

It was found from the area ratio of the proton signal ($\delta$ = 0.7 ~ 1.7 ppm) of the polypropylene moiety and the proton

signal (a) of the methylene group in the ester moiety of DMA that polypropylene having the terminal thereof modified with DMA was obtained with a yield of 30 mole % (terminal modifying efficiency).

In order to determine the syndiotactic dyad fraction of the resulting propylene, in addition, living polymerization of propylene was carried out in the same manner as described above and the reaction solution was rapidly added to 500 ml of a solution of ethanol and hydrochloric acid cooled to -78°C to stop the polymerization. The separated polymer was washed with 500 ml of methanol five times and dried at room temperature to obtain polypropylene.

Then, the resulting polypropylene was subjected to $^{13}C$-NMR analysis. The stereoregularity of the polypropylene, calculated from the multiplet intensity ratio of the methyl carbons of the spectrum, is shown in the following:

| Triad Fraction | | | Dyad Fraction a) |
|---|---|---|---|
| [rr] | [rm] | [mm] | [r] |
| 0.628 | 0.318 | 0.054 | 0.787 |

a) calculated from triad fraction

Examples 13 to 15

Example 12 was repeated except that the polymerization conditions of propylene and reaction conditions of DMA were adjusted as shown in Table 3 to obtain a terminal-modified polypropylene. The results are shown in Table 3.

Example 16

In an analogous manner to Example 4, propylene was polymerized, 500 millimoles of DMA was then added thereto at the same temperature, the temperature of the reaction system was raised to 0°C for 1 hour and reaction with DMA was carried out at 0°C for 15 hours. Subsequently, the procedure of Example 12 was repeated to obtain a terminal-modified polypropylene having the properties shown in Table 3.

Example 17

100 ml of n-heptane was charged in a 300 ml autoclave, the atmosphere was sufficiently replaced by nitrogen gas, and then the autoclave was cooled to -78°C, to which 200 millimoles of propylene was added at the same temperature, which was liquefied and dissolved in the n-heptane. A solution of 15 millimoles of $Al(C_2H_5)_2Cl$ in n-heptane and a solution of 1.5 millimole of $V(acetylacetonato)_3$ in toluene were then added thereto and stirred to start polymerization. The polymerization of propylene was carried out at -78°C for 3 hours.

A reaction with DMA was carried out in an analogous manner to Example 12 except that the reaction time was adjusted to 5 hours, thus obtaining a terminal-modified polypropylene having the properties shown in Table 3.

Example 18

Example 12 was repeated except using N,N-diethylaminoethyl methacrylate (DEA) instead of DMA and adjusting the reaction time to 5 hours, thus obtaining a polymer.

When this polymer was subjected to IR analysis, there was found a peak due to absorption of carbonyl at 1740 $cm^{-1}$.

Moreover, as a result of $^1H$-MNR, peaks of the following chemical shift values were observed in addition to a peak ($\delta = 0.7 \sim 1.7$ ppm) due to the polypropylene.

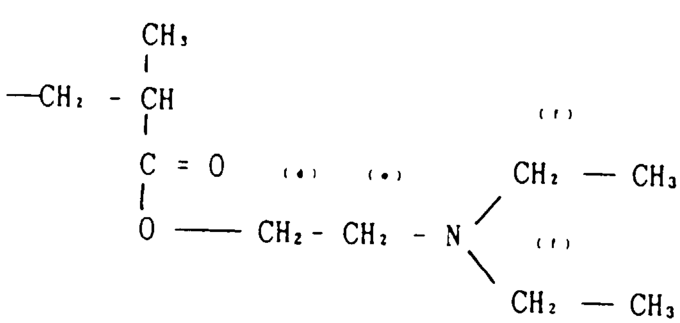

| Assignment | Chemical Shift Value (ppm: TMS Standard) |
|---|---|
| (d) | 4.1 |
| (e) | 2.7 |
| (f) | 2.6 |

It was found from the area ratio of the proton signal (δ = 0.7 ~ 1.7 ppm) of the polypropylene moiety and the proton signal (e) of the methylene group in the ester moiety of DEA that polypropylene having the terminal thereof modified with DEA was obtained with a yield of 28 mole %.

Table 3

| Examples | Polymerization Conditions of Propylene | | Reaction Conditions of Compound I | | Polymer | | | |
|---|---|---|---|---|---|---|---|---|
| | Temp. (°C ) | Time (Hr) | Temp. (°C) | Time (Hr) | Yield (g) | Mn ($x10^3$) | Mw/Mn | Terminal-modifying Efficiency (mole %) |
| 12 | -60 | 1 | 0 | 1 | 1.26 | 3.4 | 1.18 | 30 |
| 13 | -60 | 2 | 0 | 5 | 2.35 | 6.7 | 1.22 | 45 |
| 14 | -60 | 3 | 25 | 1 | 3.42 | 9.8 | 1.19 | 77 |
| 15 | -70 | 3 | 25 | 5 | 1.76 | 5.8 | 1.14 | 100 |
| 16 | -60 | 15 | 0 | 15 | 38.8 | 118.3 | 1.31 | 80 |
| 17 | -78 | 3 | 0 | 5 | 0.62 | 6.8 | 1.18 | 34 |
| 18 | -60 | 1 | 0 | 5 | 1.28 | 3.3 | 1.21 | 28 |

Examples 19

Synthesis of Living Ethylene-Propylene Random Copolymer

Living EPR was synthesized in an analogous manner to Example 7.

Reaction with N,N-dimethylaminoethvl methacrylate

250 millimoles of N,N-dimethylaminoethyl methacrylate (DMA) was added to the above described reaction system at -60°C, the temperature of the system was raised to 20°C for 1 hour and the reaction with DMA was carried out at the same temperature while stirring. After 2 hours, the reaction solution was added to 500 ml of methanol to precipitate a polymer. The resulting polymer was washed with 500 ml of methanol five times and dried under reduced pressure at room temperature to obtain 1.81 g of a polymer.

The resulting polymer exhibited a GPC curve with a single peak and had an Mn of $7.0 \times 10^3$ and Mw/Mn of 1.23, near monodisperse.

When this polymer was subjected to IR analysis, there was found an absorption due to stretching vibration of carbonyl at 1740 $cm^{-1}$.

Moreover, as a result of $^1$H-NMR analysis, peaks of the following chemical shift values were observed in addition to a peak (δ = 0.7 ~ 1.7 ppm) due to the proton of the EPR moiety.

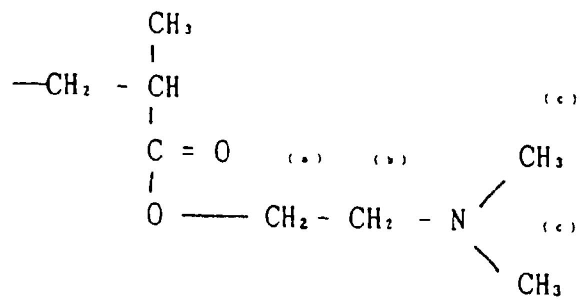

| Assignment | Chemical Shift Value (ppm: TMS Standard) |
|---|---|
| (a) | 4.2 |
| (b) | 2.5 |
| (c) | 2.3 |

It was found from the area ratio of the proton signal (δ = 0.7 ~ 1.7 ppm) of the EPR moiety and the above described proton signal (b), the polypropylene content and molecular weight of EPR that terminal-modified EPR having the terminal thereof modified with DMA was obtained with a yield of 82 mole % (terminal modifying efficiency).

Example 20

800 ml of n-heptane was charged in a 1500 ml autoclave, the atmosphere was sufficiently replaced by nitrogen gas, and then the autoclave was cooled to -60°C, to which 1.5g of propylene was added at the same temperature, which was liquefied and dissolved in the n-heptane. A solution of 40 millimoles of $Al(C_2H_5)_2Cl$ in n-heptane and a solution of 0.8 millimole of V(2-methyl-1,3-butanedionato)$_3$ in toluene were then added thereto and stirred at -60°C for 10 minutes. After the system was evacuated to 90 kPa (680 mmHg), a mixed gas of ethylene and propylene (50/50 mole ratio) was continuously fed to the system and copolymerization of ethylene-propylene was carried out at -60°C for 5 hours, thus synthesizing a living EPR.

500 millimoles of DMA was then added to the above described reaction system at the same temperature, the temperature of the reaction system was raised to 20°C for 1 hour and the reaction with DMA was carried out for 10 hours, followed by treating in an analgous manner to Example 19 to obtain a terminal-modified EPR having the properties shown in Table 4.

On the other hand, ethylene and propylene were copolymerized in the same manner as described above, thus obtaining 12.7 g of EPR with an Mn of 53.8 x $10^3$, Mw/Mn ratio of 1.25 and propylene content of 47.1 mole %.

Example 21

250 ml of toluene was charged in a 500 ml autoclave, the atmosphere was sufficiently replaced by nitrogen gas, and then the autoclave was cooled to -60°C, to which 0.2 g of propylene was added at the same temperature, which was liquefied and dissolved in the toluene. A solution of 15 millimoles of $Al(C_2H_5)_2Cl$ in n-heptane and a solution of 2.0 millimoles of V(2-methyl-1,3-butanedionato)$_3$ in toluene were then added thereto and stirred at -60°C for 10 minutes. After the system was evacuated to 96 kPa (720 mmHg), a mixed gas of ethylene and propylene (60/40 mole ratio) was continuously fed to the system and copolymerization of ethylene-propylene was carried out at -60°C for 2 hours, thus synthesizing a living EPR.

250 millimoles of DMA was then added at the same temperature and the reaction with DMA was carried out at 0°C for 10 hours, followed by treating in an analogous manner to Example 19 to obtain a terminal-modified EPR having the properties shown in Table 4.

Example 22

Living EPR was synthesized in an analogous manner to Example 10

250 millimoles of DMA was then added to the above described reaction system at the same temperature, the temperature of the reaction system was raised to 0 °C for 1 hour and the reaction with DMA was carried out for 5 hours, followed by treating in an analogous manner to Example 19 to obtain a terminal-modified EPR having the properties

shown Table 4.

Example 23

Example 19 was repeated except using N,N-diethylaminoethyl methacrylate (DEA) instead of DMA and adjusting the reaction conditions to as shown in Table 4, thus obtaining a polymer.

When this polymer was subjected to IR analysis, there was found an absorption due to stretching vibration of carbonyl at 1740 $cm^{-1}$.

Moreover, as a result of $^1$H-NMR, peaks of the following chemical shift value were observed in addition to a peak (δ = 0.7~ 1.7 ppm) due to EPR.

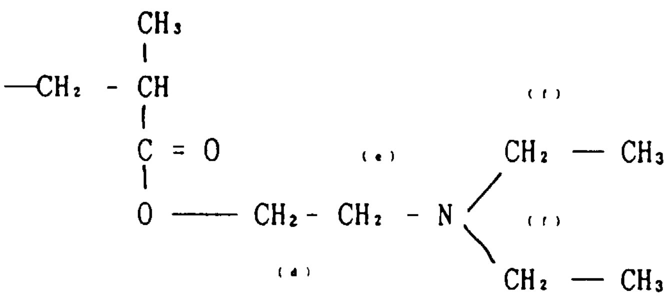

| Assignment | Chemical Shift Value (ppm: TMS Standard) |
|---|---|
| (d) | 4.1 |
| (e) | 2.7 |
| (f) | 2.6 |

It was found from the area ratio of the proton signal (δ = 0.7 ~ 1.7 ppm) of the EPR moiety and the above described proton signal (e), the polypropylene content and molecular weight of the EPR moiety that terminal-modified EPR having the terminal of the EPR chain modified with DEA was obtained with a yield of 38 mole % (terminal modifying efficiency).

Table 4

| Examples | Polymerization Conditions of EPR | | Reaction Conditions of Compound I | | Terminal-modified EPR | | | |
|---|---|---|---|---|---|---|---|---|
| | Temp. (°C) | Time (Hr) | Temp. (°C) | Time (Hr) | Yield (g) | Mn (x$10^3$) | Mw/Mn | Terminal-modifying Efficiency (mole %) |
| 19 | -60 | 1 | 20 | 2 | 1.81 | 7.0 | 1.23 | 82 |
| 20 | -60 | 5 | 20 | 5 | 12.8 | 54.1 | 1.25 | 100 |
| 21 | -60 | 2 | 0 | 10 | 2.10 | 5.5 | 1.28 | 55 |
| 22 | -78 | 3 | 0 | 5 | 1.54 | 8.6 | 1.25 | 30 |
| 23 | -60 | 1 | 20 | 1 | 1.79 | 7.1 | 1.24 | 38 |

Example 24

Living Polymerization of Propylene

100 ml of n-heptane was charged in a 300 ml flask, the atmosphere was sufficiently replaced by nitrogen gas, and then the flask was cooled to -60 °C, to which 200 millimoles of propylene was added at the same temperature, which was dissolved in the n-heptane. A solution of 15 millimoles of $Al(C_2H_5)_2Cl$ in n-heptane and a solution of 1.5 millimole of V(2-methyl-1,3-butanedionato)$_3$ in toluene were then added thereto and stirred to start polymerization. The polymerization of propylene was carried out at -60°C for 1 hour.

Reaction with Glycidyl Methacrylate

100 millimoles of glycidyl methacrylate (GMA) was added to the above described reaction system at -60 °C, the temperature of the system was raised to 25 °C for 1 hour and the reaction with GMA was carried out by stirring at the same temperature. After 5 hours, the reaction solution was added to 500 ml of ethanol to precipitate a polymer. The resulting polymer was again dissolved in n-heptane and subjected to centrifugal separation to obtain a supernatant. The supernatant was poured in 500 ml of methanol to precipitate again a polymer. The resulting polymer was washed with methanol five times and dried under reduced pressure at room temperature to obtain 1.15 g of a polymer.

The resulting polymer exhibited a GPC curve with a single peak and had an Mn of 4.2 x $10^3$ and Mw/Mn of 1.17, near monodisperse.

When this polymer was subjected to IR analysis, there was found an absorption due to stretching vibration of carbonyl group at 1740 $cm^{-1}$.

Moreover, as a result of $^1$H-NMR, peaks of the following chemical shift values were observed in addition to a peak ($\delta$ = 0.7~ 1.7 ppm) due to the proton of the polypropylene.

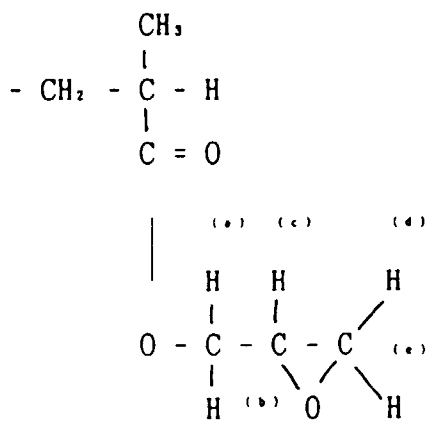

| Assignment | Chemical Shift Value (ppm: TMS Standard) |
|---|---|
| (a) | 4.3 |
| (b) | 3.9 |
| (c) | 3.2 |
| (d) | 2.8 |
| (e) | 2.6 |

It was found from the area ratio of the proton signal ($\delta$ = 0.7 ~ 1.7 ppm) of the polypropylene moiety and the above described proton signal (d) that the resulting polymer had 13 GMA units incorporated at the terminals of polypropylene, as described below.

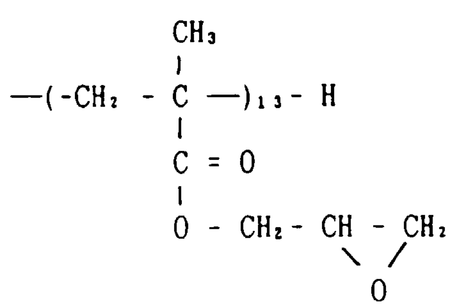

In order to determine the syndiotactic dyad fraction of the resulting polypropylene, in addition, living polymerization

of propylene was carried out in the same manner as described above and the reaction solution was rapidly added to 500 ml of a solution of ethanol and hydrochloric acid cooled to -78 °C to stop the polymerization. The separated polymer was washed with 500 ml of ethanol five times and dried at room temperature to obtain polypropylene.

Then, the resulting polypropylene was subjected to $^{13}C$-NMR analysis. The stereoregularity of the polypropylene, calculated from the multiplet intensity ratio of methyl carbon of spectrum, is shown in the following:

| Triad Fraction | | | Dyad Fraction [a)] |
|---|---|---|---|
| [rr] | [rm] | [mm] | [r] |
| 0.625 | 0.320 | 0.055 | 0.785 |

a) calculated from triad fraction

Examples 25 to 27

Example 24 was repeated except that the reaction conditions of propylene and GMA were adjusted to as shown in Table 5 to obtain a terminal-modified polypropylene. The results are shown in Table 5.

Example 28

In an analogous manner to Example 4, propylene was polymerized, 500 millimoles of GMA was then added thereto at the same temperature, the temperature of the system was raised to 0 °C for 1 hour and reaction with GMA was carried out at 0 °C for 15 hours. Subsequently, the procedure of Example 24 was repeated to obtain a terminal-modified polypropylene having the properties shown in Table 5.

Example 29

Propylene was polymerized in an analogous manner to Example 17 and the reaction with GMA was then carried out in an analogous manner to Example 24 except that the reaction time was adjusted to 5 hours, thus obtaining a terminal- modified polypropylene having the properties shown in Table 5.

Table 5

| Example | Polymerization Conditions of Propylene | | Reaction Conditions of Compound I | | Polymer | | | |
|---|---|---|---|---|---|---|---|---|
| | Temp. (°C) | Time (Hr) | Temp. (°C) | Time (Hr) | Yield (g) | Mn ($x10^3$) | Mw/Mn | n Value in General Formula |
| 24 | -60 | 1 | 25 | 5 | 1.15 | 4.2 | 1.17 | 13 |
| 25 | -60 | 1 | -40 | 3 | 0.95 | 3.6 | 1.14 | 0.8 |
| 26 | -60 | 3 | 25 | 10 | 3. 28 | 11.8 | 1.15 | 23 |
| 27 | -70 | 2 | 0 | 5 | 1.25 | 4.3 | 1.19 | 7 |
| 28 | -60 | 15 | 0 | 15 | 42.0 | 109.7 | 1.30 | 11 |
| 29 | -78 | 3 | 25 | 5 | 0.61 | 7.6 | 1.18 | 15 |

Example 30

Synthesis of Living Ethylene-Propylene Random Copolymer

Living EPR was synthesized in an analogous manner to Example 7.

Reaction with Glycidyl Methacrylate

250 millimoles of glycidyl methacrylate (GMA) was added to the above described reaction system at -60 °C, the temperature of the system was raised to 0 °C for 1 hour and the reaction with GMA was carried out by stirring at the same temperature. After 5 hours, the reaction solution was added to 500 ml of methanol to precipitate a polymer. The resulting polymer was again dissolved in n-heptane and subjected to centrifugal separation to obtain a supernatant. The supernatant was poured in 500 ml of methanol to precipitate again a polymer. The resulting polymer was washed

with methanol five times and dried under reduced pressure at room temperature to obtain 1.92 g of a polymer.

The resulting polymer exhibited a GPC curve with a single peak and had an Mn of 7.1 x $10^3$ and Mw/Mn of 1.23, near monodisperse.

When this polymer was subjected to IR analysis, there was found an absorption due to stretching vibration of a carbonyl group at 1740 $cm^{-1}$.

Moreover, as a result of $^1$H-NMR, peaks of the following chemical shift values were observed in addition to a peak ($\delta$ = 0.7 ~ 1.7 ppm) due to the proton of the EPR moiety.

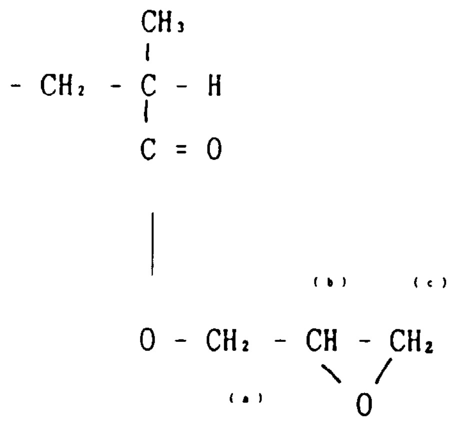

| Assignment | Chemical Shift Value (ppm: TMS Standard) |
|---|---|
| (a) | 3.9, 4.3 |
| (b) | 3.2 |
| (c) | 2.6, 2.8 |

It was found from the area ratio of the proton signal ($\delta$ = 0.7 ~ 1.7 ppm) of the EPR moiety and the above described proton signal (c), the propylene content and molecular weight of EPR that the resulting polymer had 7 GMA units incorporated at the terminal of EPR, as described below.

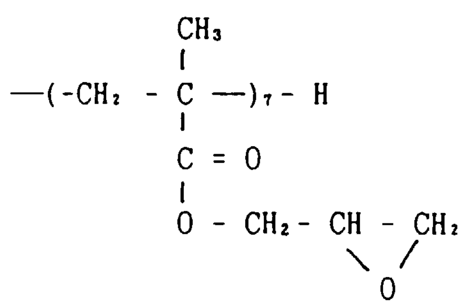

Example 31

Living EPR was synthesized in an analogous manner to Example 9.

500 millimoles of GMA was then added to thereto at the same temperature, the temperature of the reaction system was raised to 20 °C for 1 hour and the reaction with GMA was carried out for 10 hours, followed by treating in an analogous manner to Example 30 to obtain a terminal-modified EPR having the properties shown in Table 6.

Example 32

Living EPR was synthesized in an analogous manner to Example 21.

250 millimoles of GMA was then added thereto at the same temperature and the reaction with GMA was carried out at -60 °C for 3 hours, followed by treating in an analogous manner to Example 30 to obtain a terminal-modified

EPR having the properties shown Table 6.

Example 33

Living EPR was synthesized in an analogous manner to Example 10.

250 millimoles of GMA was then added to thereto at the same temperature, the temperature of the reaction system was raised to -20°C for 1 hour and the reaction with GMA was carried out for 5 hours, followed by treating in an analogous manner to Example 30 to obtain a terminal- modified EPR having the properties shown in Table 6.

Example 34

Example 30 was repeated except using glycidyl acrylate (GA) instead of GMA and adjusting the reaction conditions to as shown in Table 6, thus obtaining a polymer.

When this polymer was subjected to IR analysis, there was found an absorption due to stretching vibration of carbonyl at 1740 $cm^{-1}$.

Moreover, as a result of $^1$H-NNR analysis, it was confirmed that the resulting polymer had the following two substituent units bonded at the terminal of EPR.

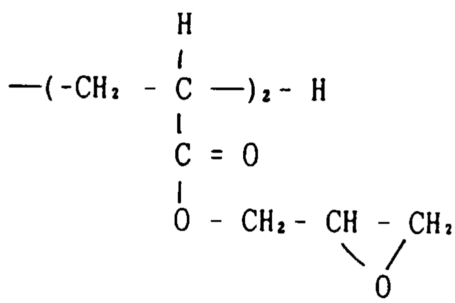

Table 6

| Example | Polymerization Conditions of EPR | | Reaction Conditions of Compound I | | Terminal-modified EPR | | | |
|---|---|---|---|---|---|---|---|---|
| | Temp. (°C) | Time (Hr) | Temp. (°C) | Time (Hr) | Yield (g) | Mn ($x10^3$) | Mw/Mn | n Value in General Formula |
| 30 | -60 | 1 | 0 | 5 | 1.92 | 7.1 | 1.23 | 7 |
| 31 | -60 | 10 | 20 | 10 | 25.7 | 103.8 | 1.29 | 21 |
| 32 | -60 | 2 | -60 | 3 | 2.19 | 5.2 | 1.26 | 1 |
| 33 | -78 | 3 | -20 | 5 | 1.57 | 8.9 | 1.25 | 3 |
| 34 | -60 | 1 | 0 | 1 | 1.79 | 7.1 | 1.24 | 2 |

Example 35

100 ml of n-heptane was charged in a 300 ml flask, the atmosphere was sufficiently replaced by nitrogen gas, and then the flask was cooled to -60 °C, to which 200 millimoles of propylene was added at the same temperature, which was liquefied and dissolved in the n-heptane. A solution of 15 millimoles of $Al(C_2H_5)_2Cl$ in n-heptane and a solution of 1.5 millimole of V(2-methyl-1,3-butanedionato)$_3$ in toluene were then added thereto and stirred to start polymerization. The polymerization of propylene was carried out at -60 °C for 1 hour. 100 millimoles of methacrylic acid chloride (MACl) was added thereto at -60°C and reacted for 1 hour at the same temperatrue.

Then, the reaction solution was poured in 500 ml of ethanol to precipitate a polymer. The precipitate was dissolved again in n-heptane and subjected to centrifugal separation to obtain a supernatant, which was then poured in 500 ml of methanol to precipitate again a polymer. The resulting polymer was washed with methanol five times and dried under reduced pressure at room temperature to obtain 1.08 g of a polymer.

The resulting polymer exhibited a GPC curve with a single peak and had an Mn of 3.6 x $10^3$ and Mw/Mn of 1.21,

near monodisperse.

When this polymer was subjected to analysis of the infrared absorption spectrum (IR) there was found a peak due to absorption of carbonyl group at 1740 $cm^{-1}$.

Moreover, as a result of NMR analysis, peaks of the following chemical shift values were observed in addition to a peak ($\delta$ = 0.7~ 1.7pm) due to the proton of the polypropylene. It was found that methyl methacrylate (MMA) was bonded to the terminal of the polypropylene chain.

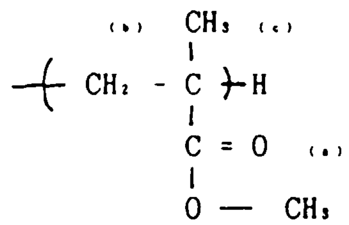

| Assignment | Chemical Shift Value (ppm: TMS Standard) |
|---|---|
| (a) | 3.6 |
| (b) | 1.9 |
| (c) | 2.5 |

It was also found from the area ratio of the proton signal ( $\delta$ = 0.7 ~ 1.7 ppm) of the polypropylene moiety and the proton signal (a) of MMA unit that the resulting polymer had 7 MMA units incorporated at the terminals of polypropylene.

It is assumed from the above described results that the reaction product obtained by reaction of the living polypropylene and MACl was a polymer having the following 7 MACl units bonded to the terminal of the polypropylene chain and the MACl unit was converted into MMA unit through contacting with methanol.

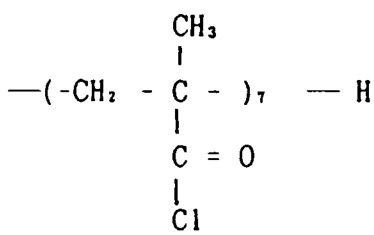

In order to determine the syndiotactic dyad fraction of the resulting polypropylene, in addition, living polymerization of propylene was carried out in the same manner as described above and the reaction solution was rapidly added to 500 ml of a solution of methanol and hydrochloric acid cooled to -78 °C to stop the polymerization. The separated polymer was washed with 500 ml of methanol five times and dried at room temperature to obtain polypropylene.

Then, the resulting polypropylene was subjected to $^{13}$C-NMR analysis. The streoregularity of the polypropylene, calculated from the multiplet intensity ratio of methyl carbon of spectrum, is shown in the following:

| Triad Fraction | | | Dyad Fraction a) |
|---|---|---|---|
| [rr] | [rm] | [mm] | [r] |
| 0.629 | 0.314 | 0.057 | 0.786 |

a) calculated from triad fraction

Examples 36 to 38

Example 35 was repeated except that the reaction conditions of propylene and MACl were adjusted to as shown in Table 7 to obtain a terminal-modified polypropylene. The results are shown in Table 7.

Example 39

In an analogous manner to Example 4, propylene was polymerized, 500 millimoles of MACl was then added thereto at the same temperature, the temperature of the reaction system was raised to -40 °C for 1 hour and reaction with MACl was carried out at -40 °C for 5 hours. Subsequently, the procedure of Example 35 was carried out to obtain a terminal-modified polypropylene having the properties shown Table 7.

Example 40

Propylene was polymerized in an analogous manner to Example 17 and the reaction with MACl was then carried out in an analogous manner to Example 35 except that the reaction conditions were adjusted to 0 °C and 3 hours, thus obtaining a terminal-modified polypropylene having the properties shown in Table 7.

Example 41

Example 35 was repeated except using acrylic acid chloride in place of MACL to obtain a polymer having the properties as shown in Table 7.

When this polymer was subjected to IR analysis, there was found a peak due to absorption of carbonyl at 1740 $cm^{-1}$. Moreover, as a result of NMR analysis, peaks of the following chemical shift values were observed in addition to a peak (δ = 0.7∼ 1.7pm) due to the polypropylene and it was found that methyl acrylate (MA) unit was bonded to the polypropylene chain.

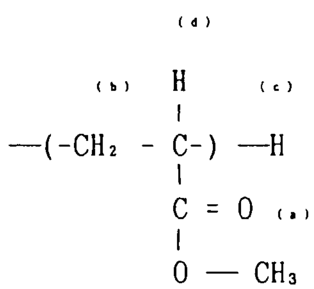

| Assignment | Chemical Shift Value (ppm: TMS Standard) |
|---|---|
| (a) | 3.7 |
| (b) | 1.9 |
| (c) | 2.3 |
| (d) | 2.5 |

It was found from the area ratio of the proton signal (δ = 0.7 ∼ 1.7 ppm) of the polypropylene moiety and the of MA unit that the resulting polymer had 4.0 MA units incorporated at the terminals of the polypropylene chain. It is assumed from the above described results that the reaction product obtained by reaction of the living polypropylene and acrylic acid chloride was a polymer having the following 4.0 acrylic acid chloride units bonded to the terminal of the polypropylene chain and the acrylic acid chloride unit was converted into MA unit through contacting with methanol.

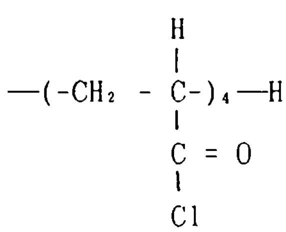

Table 7

| Example | Polymerization Conditions of Propylene | | Reaction Conditions of Compound I | | Polymer | | | |
|---|---|---|---|---|---|---|---|---|
| | Temp. (°C) | Time (Hr) | Temp. (°C) | Time (Hr) | Yield (g) | Mn ($x10^3$) | Mw/Mn | n Value in General Formula |
| 35 | -60 | 1 | -60 | 1 | 1.08 | 3.6 | 1.21 | 7 |
| 36 | -60 | 1 | -40 | 3 | 1.15 | 4.0 | 1.17 | 11 |
| 37 | -60 | 3 | -60 | 1 | 3.36 | 10.2 | 1.18 | 8 |
| 38 | -70 | 2 | 0 | 1 | 1.27 | 4.3 | 1.15 | 10 |
| 39 | -60 | 15 | -40 | 5 | 42.9 | 105.1 | 1.27 | 15 |
| 40 | -78 | 3 | 0 | 3 | 0.72 | 7.6 | 1.15 | 3 |
| 41 | -60 | 1 | -60 | 1 | 0.96 | 3.5 | 1.20 | 4 |

Example 42

Synthesis of Living Ethylene-Propylene Random Copolymer

Living EPR was synthesized in an analogous manner to Example 7.

Reaction with Methacrylic Acid Chloride

250 millimoles of methacrylic acid chloride (MACl) was added to the above described reaction system at -60 °C and reacted at the same temperature for 1 hour. Then, the reaction solution was added to 500 ml of methanol to precipitate a polymer. The resulting polymer was again dissolved in n-heptane and subjected to centrifugal separation to obtain a supernatant. This supernatant was poured in 500 ml of methanol to precipitate again the polymer. The resulting polymer was washed with methanol five times and dried under reduced pressure at room temperature to obtain 1.95 g of a polymer.

The resulting polymer exhibited a GPC curve with a single peak and had an Mn of $7.1 \times 10^3$ and Mw/Mn of 1.23, near monodisperse.

When this polymer was subjected to IR analysis, there was found an absorption due to stretching vibration of carbonyl at 1740 $cm^{-1}$.

Moreover, as a result of $^1$H-NMR analysis, peaks of the following chemical shift values were observed in addition to a peak (δ = 0.7~ 1.7 ppm) due to the proton of the EPR moiety and it was found that methyl methacrylate (MMA) unit was bonded to the terminal of EPR chain.

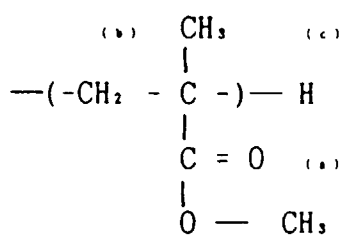

| Assignment | Chemical Shift Value (ppm: TMS Standard) |
|---|---|
| (a) | 3.6 |
| (b) | 1.9 |
| (c) | 2.5 |

It was found from the area ratio of the proton signal (δ = 0.7 ~ 1.7 ppm) of the EPR moiety and the above described proton signal (a), the propylene content and molecular weight of EPR that 6 MMA units were bonded to the terminal

of the EPR chain.

It is assumed from the above described results that the reaction product obtained by the reaction of the living EPR with MACl is a polymer having 6 MACL units, as described below, bonded to the terminal of the EPR chain and the MACl unit was converted into MMA unit by contacting with methanol.

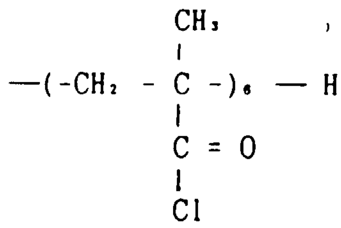

Example 43

In an analogous manner to Example 9, living EPR was synthesized.

500 millimoles of MACl was then added thereto at the same temperature, the temperature of the reaction system was raised to -40°C for 1 hour and the reaction with MACl was carried out for 5 hours. Subsequently, the procedure of Example 42 was repeated to obtain a terminal-modified EPR having the properties shown in Table 8.

Example 44

In an analogous manner to Example 21, living EPR was synthesized.

250 millimoles of MACl was then added thereto at the same temperature, the temperature of the reaction system was raised to 0 °C and the reaction with MACl was carried out at 0 °C for 1 hour. Subsequently, the procedure of Example 42 was repeated to obtain a terminal-modified EPR having the properties shown in Table 8.

Example 45

In an analogous manner to Example 10, living EPR was synthesized.

250 millimoles of MACl was then added thereto at the same temperature and the reaction with MACl was carried out at -60 °C for 3 hours. Subsequently, the procedure of Example 42 was repeated to obtain a terminal-modified EPR having the properties shown in Table 8.

Example 46

Example 42 was repeated except using acrylic acid chloride instead of MACl and adjusting the reaction conditions to as shown in Table 8, thus obtaining a polymer.

When this polymer was subjected to IR analysis, there was found an absorption due to stretching vibration of carbonyl at 1740 $cm^{-1}$.

Moreover, as a result of $^1$H-NMR analysis, peaks of the following chemical shift values were observed in addition to a peak (δ = 0.7~ 1.7 ppm) due to the proton of the EPR moiety and it was found that methyl acrylate (MA) unit was bonded to the terminal of EPR chain.

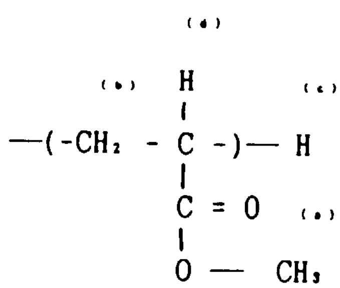

| Assignment | Chemical Shift Value (ppm: TMS Standard) |
|---|---|
| (a) | 3.7 |
| (b) | 1.9 |
| (c) | 2.3 |
| (d) | 2. 5 |

It was found from the area ratio of the proton signal (δ = 0.7 ~ 1.7 ppm) of the EPR moiety and propylene signal (a) of the MA unit, the propylene content and molecular weight of the EPR moiety that 3 MA units were bonded to the terminal of EPR.

It is assumed from the above described results that the reaction product obtained by the reaction of the living EPR with the acrylic acid chloride was a polymer having 3 acrylic acid chloride units, as described below, bonded to the terminal of the EPR chain and the acrylic acid chloride unit was converted into MA unit by contacting with methanol.

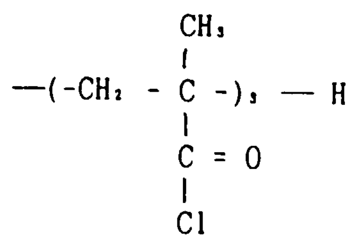

Table 8

| Example | Polymerization Conditions of EPR | | Reaction Conditions of Compound I | | Terminal-modified EPR | | | |
|---|---|---|---|---|---|---|---|---|
| | Temp. (°C) | Time (Hr) | Temp. (°C) | Time (Hr) | Yield (g) | Mn ($x10^3$) | Mw/Mn | n Value in General Formula |
| 42 | -60 | 1 | -60 | 1 | 1.95 | 7.1 | 1.23 | 6 |
| 43 | -60 | 10 | -40 | 5 | 26.1 | 104.5 | 1.28 | 13 |
| 44 | -60 | 2 | 0 | 1 | 2.10 | 5.2 | 1.27 | 2 |
| 45 | -78 | 3 | -60 | 3 | 1.55 | 8.6 | 1.25 | 1 |
| 46 | -60 | 1 | -60 | 1 | 1.86 | 6.9 | 1.23 | 3 |

Utility and Possibility on Commercial Scale

The polymer of the present invention is available for use as a compatibilizer, a polymer modifier capable of imparting dyeing property or adhesiveness to polymers, or a viscosity index-improver for, to example, lubricating oils.

**Claims**

**1.** A terminal-modified polyolefin in which the terminal of polypropylene or an ethylene-propylene random copolymer is modified with a substituent represented by the following General Formula I:

General Formula I

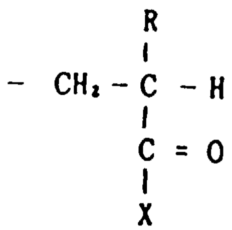

I

wherein R is a hydrogen atom or methyl group, X is a halogen atom or OZ group wherein Z is $C_mH_{2m} \bullet OSiR^1R^2R^3$, $C_mH_{2m} \bullet OSi(R^4R^5)\text{-}OSiR^6R^7R^8$ or $C_mH_{2m} \bullet OH$ wherein $R^1$ to $R^3$, $R^4$ to $R^5$ and $R^6$ to $R^8$ are the same or different alkyl groups each containing 1 to 8 carbon atoms or aryl groups and m is an integer of 1 to 6, a group represented by the following general formula:

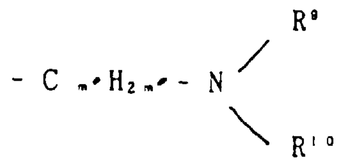

wherein $R^9$ and $R^{10}$ are the same or different alkyl groups containing 1 to 4 carbon atoms and m' is an integer of 1 to 4, and a group represented by the following formula:

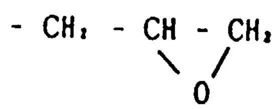

.

2. A polyolefin according to claim 1 wherein X is a chlorine atom.

3. A method of preparing a terminal-modified polyolefin as claimed in claim 1 which method comprises polymerising propylene or random-copolymerising ethylene and propylene in the presence of a catalyst consisting of an organoaluminum compound and a vanadium compound represented by the following General Formula III:

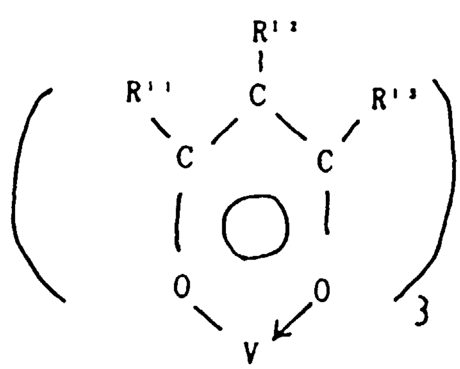

III

wherein $R^{11}$ to $R^{13}$ are hydrogen atoms or hydrocarbon groups of 1 to 8 carbon atoms and at least one of $R^{11}$ to $R^{13}$ must be a hydrogen atom, but all of $R^{11}$ to $R^{13}$ must not be hydrogen atoms, thus obtaining respectively living polypropylene or living ethylene-propylene copolymer, and then reacting the polypropylene or ethylene-propylene copolymer with a methacrylic acid (acrylic acid) derivative represented by the following General Formula IV:

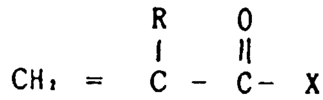

IV

wherein R and X have the same meanings as defined in claim 1, except when X is OZ, wherein Z is $C_mH_{2m} \bullet OH$., in which case the above described polymers are obtained by reacting a reaction product having the above described Si-containing group with a proton donor.

4. Use of a terminal-modified polyolefin as claimed in claim 1 or 2 or as prepared by the method claimed in claim 3 as a compatibilizer, viscosity index-improver, or for imparting dyeability or adhesiveness to polymers.

**Patentansprüche**

1. Endständig modifiziertes Polyolefin, in dem die endständige Gruppe aus Polypropylen oder einem statistischen Ethylen-Propylen-Copolymer mit einem Substituenten der folgenden allgemeinen Formel I

   Allgemeine Formel I

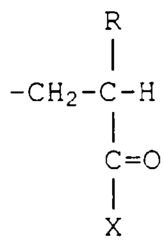

I,

in der R ein Wasserstoffatom oder eine Methylgruppe ist, X ein Halogenatom oder eine OZ-Gruppe bedeutet, in der Z $C_mH_{2m}{\cdot}OSiR^1R^2R^3$, $C_mH_{2m}{\cdot}OSi(R^4R^5){\text -}OSiR^6R^7R^8$ oder $C_mH_{2m}{\cdot}OH$ bedeutet, wobei $R^1$ bis $R^3$, $R^4$ bis $R^5$ und $R^6$ bis $R^8$ die gleichen oder verschiedene, jeweils 1 bis 8 Kohlenstoffatome enthaltende Alkylgruppen oder Arylgruppen darstellen und m eine ganze Zahl von 1 bis 6 ist, einer Gruppe der folgenden allgemeinen Formel

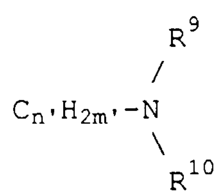

,

in der $R^9$ und $R^{10}$ die gleichen oder verschiedene, 1 bis 4 Kohlenstoffatome enthaltende Alkylgruppen sind und m' eine ganze Zahl von 1 bis 4 ist, und einer Gruppe der folgenden Formel

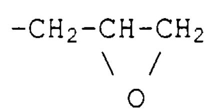

modifiziert ist.

2. Polyolefin nach Anspruch 1, in dem X ein Chloratom ist.

3. Verfahren zur Herstellung eines endständig modifizierten Polyolefins nach Anspruch 1, umfassend die Polymerisation von Propylen oder die statistische Copolymerisation von Ethylen und Propylen in Gegenwart eines Katalysators aus einer Organoaluminiumverbindung und einer Vanadiumverbindung der folgenden allgemeinen Formel III

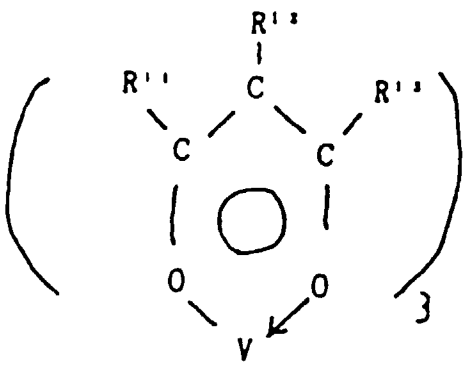

III

in der $R^{11}$ bis $R^{13}$ Wasserstoffatome oder Kohlenwasserstoffgruppen mit 1 bis 8 Kohlenstoffatomen sind und mindestens einer der Reste $R^{11}$ bis $R^{13}$ ein Wasserstoffatom sein muß, aber nicht alle Reste $R^{11}$ bis $R^{13}$ Wasserstoffatome sein dürfen, wodurch man lebendes Polypropylen bzw. ein lebendes Ethylen-Propylen-Copolymer enthält, und dann Umsetzung des Polypropylens oder Ethylen-Propylen-Copolymeren mit einem Methacrylsäurederivat (Acrylsäurederivat) der folgenden allgemeinen Formel IV

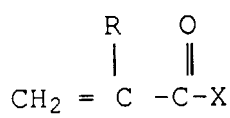

IV,

in der R und X die gleichen Bedeutungen haben wie in Anspruch 1 definiert, ausgenommen der Fall, in dem X OZ ist, wo Z $C_mH_{2m}$·OH. bedeutet, wobei die vorstehend beschriebenen Polymere durch Umsetzung eines die vorstehende Si-haltige Gruppe enthaltenden Reaktionsprodukts mit einem Protonendonor erhalten werden.

4. Verwendung eines an den endständigen Gruppen modifizierten Polyolefins nach Anspruch 1 oder 2 oder eines nach dem Verfahren von Anspruch 3 hergestellten Polyolefins als Mittel zur Verbesserung der Kompatibilität oder Mittel zur Verbesserung des Viskositätsindex bzw. als Mittel, das Polymere färbbar macht oder ihnen Klebrigkeit verleiht.

## Revendications

1. Polyoléfine à modification terminale, dans laquelle l'extrémité d'un polypropylène ou d'un copolymère statistique styrène-propylène est modifiée avec un substituant représenté par la formule générale I suivante :

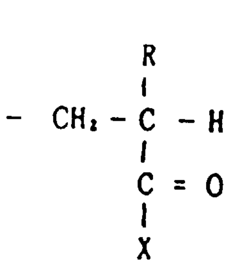

dans laquelle R représente un atome d'hydrogène ou un groupe méthyle, X représente un atome d'halogène ou un groupe OZ dans lequel Z représente un groupe $C_mH_{2m}$ . $OSiR^1R^2R^3$, $C_mH_{2m}$ . $OSi(R^4R^5)$-$OSiR^6R^7R^8$ ou $C_mH_{2m}$ . OH dans lequel $R^1$ à $R^3$, $R^4$ à $R^5$ et $R^6$ à $R^8$ représentent des groupes alkyle identiques ou différents contenant chacun 1 à 8 atomes de carbone ou des groupes aryle et m représente un nombre entier de 1 à 6, un

groupe représenté par la formule générale suivante :

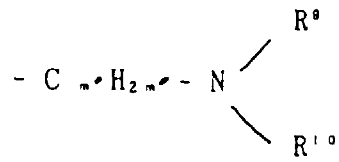

dans laquelle $R^9$ et $R^{10}$ représentent des groupes alkyle identiques ou différents contenant 1 à 4 atomes de carbone et m' représente un nombre entier de 1 à 4, et un groupe représenté par la formule suivante :

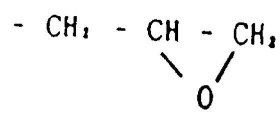

2. Polyoléfine suivant la revendication 1, dans laquelle X représente un atome de chlore.

3. Procédé pour la préparation d'une polyoléfine à modification terminale suivant la revendication 1, procédé qui comprend la polymérisation de propylène ou la copolymérisation statistique d'éthylène et de propylène en présence d'un catalyseur consistant en un composé organique d'aluminium et un composé de vanadium représenté par la formule générale III suivante :

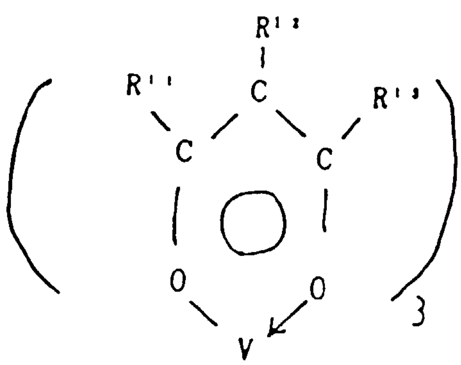

III

dans laquelle $R^{11}$ à $R^{13}$ représentent des atomes d'hydrogène ou des groupes hydrocarbonés ayant 1 à 8 atomes de carbone et au moins un des groupes $R^{11}$ à $R^{13}$ doit représenter un atome d'hydrogène, mais tous les groupes $R^{11}$ à $R^{13}$ ne doivent pas représenter des atomes d'hydrogène, ce qui permet d'obtenir, respectivement, un polypropylène vivant ou copolymère éthylène-propylène vivant, puis la réaction du polypropylène ou copolymère éthylène-propylène avec un dérivé d'acide méthacrylique (acide acrylique) représenté par la formule générale IV suivante :

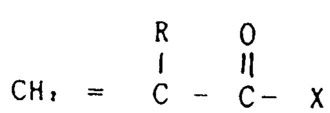

IV

dans laquelle R et X répondent aux définitions mentionnées dans la revendication 1, sauf lorsque X représente un groupe OZ, dans lequel Z représente un groupe $C_mH_{2m}$ . OH, auquel cas les polymères décrits ci-dessus sont obtenus en faisant réagir un composé de réaction comprenant le groupe contenant Si décrit ci-dessus avec un donneur de protons.

4. Utilisation d'une polyoléfine à modification terminale suivant la revendication 1 ou 2, ou préparée par le procédé suivant la revendication 3 comme compatibilisant ou agent améliorant la viscosité ou bien pour conférer une aptitude à la teinture ou adhésivité à des polymères.